# EUROPÄISCHE PATENTANMELDUNG

(11) **EP 0 989 340 A1**
(43) Veröffentlichungstag der Anmeldung: **29.03.2000**
(21) Anmeldenummer: 99116485.6
(22) Anmeldetag: 23.08.1999
(51) Int. Cl.: F16H 61/22

(54) **Verriegelungseinrichtung für eine Wähleinrichtung**

(30) Priorität: 26.09.1998 DE 19844275
(71) Anmelder: Dr.Ing. h.c.F. Porsche Aktiengesellschaft, 70435 Stuttgart (DE); DaimlerChrysler AG, 70546 Stuttgart (DE)
(72) Erfinder: Sander, Edmund, 71229 Leonberg (DE); Weiss, Paul, 73760 Ostfildern (DE)

(57) **Zusammenfassung**

Die Erfindung betrifft eine Verriegelungseinrichtung (1) für eine Wahleinrichtung mit einem Verriegelungsglied (3), wobei das Verriegelungsglied mit Vorrichtungen zur Aufnahme zumindest eines Sperrelementes (4) versehen ist. Zur Betätigung des Sperrelementes ist ferner ein fremdkraftbetätigter Sperrhebel (12) vorgesehen. Um die Betriebssicherheit bei der Verriegelung der Wähleinrichtung zu erhöhen wird vorgeschlagen, am Sperrhebel eine Stütze (14) zur Abstützung des Sperrelementes in einer ersten, verriegelten Position und ein weiteres Element (15) zum Verschwenken des Sperrelementes in eine zweite, entriegelte Position vorzusehen.

## Beschreibung

Die Erfindung betrifft eine Verriegelungseinrichtung für eine Wähleinrichtung die beispielsweise zur Verriegelung eines Wählhebels in Fahrzeugen einsetzbar ist.

Die von derartigen Sperrelementen zu übertragenden Sperrkräfte können vergleichsweise hohe Werte erreichen, da durch das Sperren des Wählhebels mit Hilfe des Sperrelementes ein Mißbrauch des Fahrzeuges und gegebenenfalls auch ein Diebstahl des Fahrzeuges verhindert werden soll. So können beispielsweise bei einer zu sperrenden Kraft am Wählhebel von 300 N am Sperrelement Kräfte in der Größe von 1.500 N auftreten. Beispielsweise aus der DE 196 41 706 C1 ist es bereits bekannt, daß ein mit einer Rückstellfeder versehener Hubmagnet einen gehäusefesten Sperrnocken mit einer wählhebelfesten Sperrkulisse in Eingriff bringen kann, um so den Wählhebel zu sperren.

Ferner ist aus der EP 0 519 208 A1 eine Verriegelungseinrichtung für einen Wählhebel bekannt geworden, bei dem ein am Wählhebel angeordnetes Verriegelungsglied in vorgegebenen Wählhebelstellungen von Vertiefungen eines Sperrelementes, hier einer drehbaren Klinke, erfaßt werden. Zur Bewegung der Klinke ist ein gehäusefest gelagerter Winkelhebel vorgesehen, dessen eines Ende mit einem Hubmagneten verbunden ist und dessen anderes Ende eine Rolle trägt, an der sich die Klinke abstützt. Dadurch, daß die Flanken der Vertiefung steil gewählt sind, erzeugt eine am Wählhebel angreifende Kraft beim gesperrten Wählhebel nur eine geringe Kraftkomponente in Drehrichtung der Klinke, so daß diese Kräfte über den Winkelhebel leicht am Gehäuse abgestützt werden können. Der Hubmagnet muß hierbei im Idealfall gar keine Sperrkräfte, jedenfalls aber nur geringe Sperrkräfte aufnehmen. Seine Hauptaufgabe besteht somit darin, den Winkelhebel in und außer Eingriff mit der Klinke zu bringen, wobei letzteres auch bei kraftbelastetem Wählhebel möglich sein muß.

Gegenüber diesem Stand der Technik ist es Aufgabe der Erfindung, eine Verriegelungseinrichtung für eine Wähleinrichtung hinsichtlich ihrer Betriebssicherheit zu verbessern.

Diese Aufgabe wird erfindungsgemäß mit den Merkmalen des Patentanspruches 1 gelöst.

Erfindungsgemäß wird vorgeschlagen, am Sperrhebel ein erstes Element zur Abstützung des Sperrelementes in einer ersten Position sowie ein zweites Element zum Verschwenken des Sperrelementes in seine zweite Position vorzusehen. In vorteilhafter Weise ist das Sperrelement in seiner ersten Position durch den Sperrhebel gegen das Gehäuse formschlüssig abgestützt, so daß eine Bewegung des Sperrelementes und damit des Verriegelungsgliedes nur unter Verformung des Sperrhebels möglich ist. Auf diese Weise können auch sehr große, auf die Verriegelungseinrichtung einwirkende Kräfte aufgenommen werden. Dies gilt insbesondere auch für stoßartige Kräfte, die bei einer nicht formschlüssigen Abstützung des Sperrelementes zu einer Schwingungsanregung des Sperrelementes und damit letztendlich zu einem Öffnen der Verriegelungseinrichtung führen kann. Durch das zweite am Sperrhebel vorgesehene Element zum Verschwenken des Sperrelementes in seine zweite Position ist sichergestellt, daß beim Entriegeln der Verriegelungseinrichtung durch Verschwenken des Sperrhebels das Sperrelement in seine zweite Position gebracht wird, wenn das erste Element das Sperrelement nicht mehr abstützt.

Vorteilhafte Weiterbildungen der Erfindung sind in den Unteransprüchen beschrieben.

So wird zur Ausbildung des ersten Elementes des Sperrhebels vorgeschlagen, dieses als Stützhebel auszubilden, der mit einer korrespondierenden Wirkfläche am Sperrelement zusammenwirkt. Stützhebel und Wirkfläche sind dabei so zueinander auszurichten, daß eine Kraft auf das Sperrelement in der zu sperrenden Richtung einweisend wirkt, d.h. zu einer Erhöhung der Anlagekraft des Stützhebels an der Wirkfläche führt. Die Wirkfläche kann beispielsweise eine Ausnehmung am Sperrelement sein, in die ein Ende des Stützhebels eingreift. Dieses Ende des Stützhebels kann ferner zur Verminderung der Reibungskräfte mit einer Rolle versehen sein.

Das Sperrelement weist vorzugsweise zwei mit dem Verriegelungsglied zusammenwirkende Sperrklinken auf. Zur Aufnahme der Sperrklinken sind am Verriegelungsglied Vorsprünge und/oder Ausnehmungen vorgesehen. Hierbei ist die erste Sperrklinke in der Ruheposition der Verriegelungseinrichtung wirksam und verriegelt einen an der Wähleinrichtung vorgesehenen Wählhebel, beispielsweise in seiner Position "P". Die zweite Sperrklinke ist in einer zweiten (Arbeits-) Position der Verriegelungseinrichtung wirksam und verhindert beispielsweise eine Betätigung des genannten Wählhebels über eine Position "N" hinaus in eine Position "R".

Zur Betätigung des Sperrhebels und damit zur Betätigung der Verriegelungseinrichtung insgesamt wird vorzugsweise durch einen Hubmagneten eine Fremdkraft auf den Sperrhebel aufgebracht. Die Krafteinleitung der Fremdkraft in den Sperrhebel soll dabei vorzugsweise so erfolgen, daß der Sperrhebel nach dem Aufbringen der Fremdkraft aus seiner wiederbelasteten Ruheposition heraus zunächst mit einer hohen Kraft bei geringem Weg und nachfolgend nach dem Herausschwenken des Stützhebels aus der Wirkfläche am Sperrelernent mit hohem Weg bei dann verminderter Betätigungskraft bewegt wird. Ein derartiger Kraftverlauf kann vorzugsweise dadurch erreicht werden, daß die Wirkrichtung der Einleitung der Fremdkraft in den Sperrhebel über die Schwenkbewegung variiert wird. Während anfangs der Betätigung des Sperrhebels ein großer Hebelarm vorzusehen ist, kann dieser Hebelarm nach dem Lösen des Stützhebels zugunsten eines größeren Weges vermindert werden. Die Änderung des Hebelarmes kann vorzugsweise durch entsprechende Auslegung einer zur Einleitung der Fremdkraft in den Sperrhebel verwendeten Fläche erreicht werden; es ist jedoch ohne weiteres auch möglich, zur Einleitung der Fremdkraft in den Sperrhebel ein Hebelgetriebe vorzusehen. Der besondere Vorteil dieser Auslegung liegt darin, daß bei einem zur Aufbringung der Fremdkraft begrenzten Hub (wie dies beispielsweise bei Hubmagneten der Fall ist) sowohl eine Entriegelung der Verriegelungseinrichtung auch unter Last, als auch ein sicheres Herausschwenken des Sperrelementes möglich ist.

Schließlich wird vorgeschlagen, die am Sperrelement vorgesehenen Vorsprünge und Ausnehmungen so zu gestalten, daß der Stützhebel außerhalb der zu verriegelnden Position des Verriegelungsgliedes (z.B. der Position "P" des Wählhebels) nicht in Eingriff mit dem Sperrhebel gerät. Durch diese Maßnahme ist eine Abstützung des Sperrelementes nur in der vorgesehenen Position des Verriegelungsgliedes möglich und somit sichergestellt, daß das Sperrelement in diesen anderen Positionen bewegbar bleibt.

Die Erfindung ist nachstehend anhand des in den Figuren dargestellten Ausführungsbeispieles näher erläutert.

Es zeigen
- Fig. 1: eine Übersicht über die öffnungsgemäße Verriegelungseinrichtung,
- Fig. 2: eine Detaildarstellung in einer Stellung "P" mit einem bestromten Hubmagneten,
- Fig. 3: eine Detaildarstellung in einer Stellung "N" bei bestromten Hubmagneten und
- Fig. 4: eine Detaildarstellung in einer Position "3" bei unbestromten Hubmagneten.

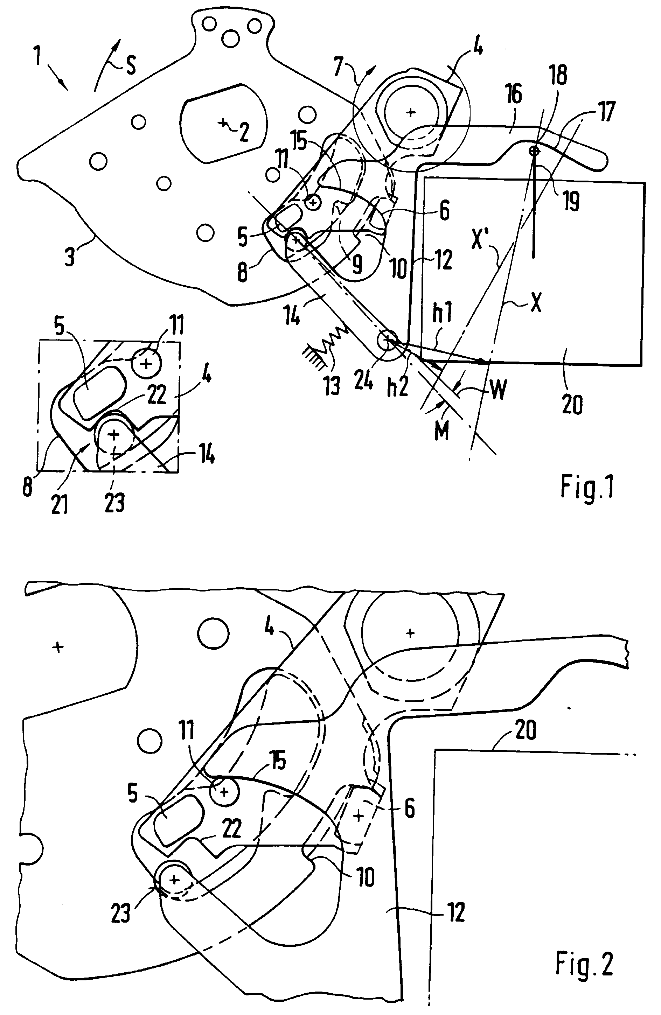

Fig. 1 zeigt eine Verriegelungseinrichtung 1, die in einer nicht näher dargestellten Wähleinrichtung angeordnet ist. Die Wähleinrichtung weist einen ebenfalls nicht dargestellten Wählhebel auf, der um eine Achse 2 schwenkbar gelagert und mit einem Verriegelungsglied 3 drehfest verbunden ist. Ferner ist ein Sperrelement 4 vorgesehen, das zwei Sperrklinken 5, 6 aufweist und durch eine nicht dargestellte Drehfeder in Richtung des Pfeiles 7 vorgespannt gehalten ist. Korrespondierend zur ersten Sperrklinke 5 ist in einer Ausnehmung 8 des Verriegelungsgliedes 3 ein Vorsprung 9 angeordnet. Ferner ist außenseits am Verriegelungsglied 3 eine Ausnehmung 10 vorgesehen, die mit der zweiten Sperrklinke 6 korrespondiert. Schließlich ist auf dem Sperrelement 4 ein Zapfen 11 vorgesehen.

Ein ebenfalls gehäusefest gelagerter Sperrhebel 12 ist durch eine Druckfeder 13 in seiner dargestellten Ruhelage gehalten. Der Sperrhebel 12 weist eine Stütze 14, eine Gleitfläche 15 und an einem Betätigungsarm 16 eine Betätigungsfläche 17 auf. Auf die Betätigungsfläche 17 wirkt ein Kopf 18 eines Stößels 19, der von einem Hubmagneten 20 bewegt wird.

In der Darstellung nach Fig. 1 befindet sich das Verriegelungsglied in einer Stellung P des Wählhebels. Der Hubmagnet 20 ist nicht bestromt, der Sperrhebel 12 befindet sich ebenso wie das Sperrelement 4 in seiner Ruheposition. Die zweite Sperrklinke 6 befindet sich in Eingriff mit der Ausnehmung 10. Der Kontakt zwischen der zweiten Sperrklinke 6 und der Ausnehmung ist so gestaltet, daß bei einer Bewegung des Verriegelungsgliedes 1 in Sperrichtung S die Sperrklinke 6 aus der Ausnehmung 10 herausgedrückt wird; d.h. die Ausnehmung 10 ist in Bezug auf die Sperrklinke 6 ausweisend gestaltet.

Um zu verhindern, daß bei einer in Sperrichtung S aufgebrachten Kraft die Sperrklinke 6 aus der Ausnehmung 10 herausgedrückt wird, ist am Sperrelement 4 korrespondierend zu einem Kopf 21 der Stütze 14 eine Ausnehmung 22 vorgesehen, die eine am Kopf 21 der Stütze 14 drehbar gelagerte Rolle 23 aufnimmt. Der Kontakt zwischen der Rolle 23 und der Ausnehmung 22 ist so gestaltet, daß eine Wirkungslinie W um etwa 0,5° von einer Mittellinie M der Stütze 14 abweicht, so daß insgesamt der Kontakt zwischen der Stütze 14 und der Ausnehmung 22 einweisend gestaltet ist. Bei dieser Gestaltung führt eine entgegen der Pfeilrichtung 7 am Sperrelement 4 angreifende Kraft dazu, daß der Sperrhebel 12 im dargestellten Beispiel im Uhrzeigersinn bewegt wird und damit ein Herausgleiten der Rolle 23 aus der Ausnehmung 22 sicher verhindert ist. Durch die gewählte geringe Abweichung zwischen der Wirklinie W und der Mittellinie M sind die hierbei auf den Sperrhebel 12 wirkenden Kräfte vergleichsweise klein und können durch die Kraft des Hubmagneten 20 überwunden werden.

In der dargestellten Position ist somit das Verriegelungsglied 3 formschlüssig am Gehäuse der Wähleinrichtung abgestützt und nur unter Verformung oder Bruch der Sperrklinke 6 oder des Sperrhebels 12 zu bewegen. Hierbei werden keinerlei Kräfte über einen Feder wie die Druckfeder 13 oder den Hubmagneten 20 abgestützt. Um die Verriegelungseinrichtung 1 zu entriegeln und den Wählhebel aus der dargestellten Position P bewegen zu können, wird der Hubmagnet 20 bestromt. Der Kopf 18 des Stößels 19 drückt nun auf den Betätigungshebel 17 und mit dem Verschwenken des Sperrhebels 12 gleitet der Kopf 18 auf der Betätigungsfläche 17. Die Betätigungsfläche 17 ist so gekrümmt, daß zu Beginn der Bewegung des Sperrhebels 12 eine Wirklinie X in Bezug auf einen Drehpunkt 24 des Sperrhebels 12 einen großen Hebel h1 aufweist, während mit zunehmender Schwenkbewegung des Sperrhebels 12 die Wirklinie in Richtung X' verschoben wird und der Hebel auf das Maß h2 vermindert wird. Durch diese Auslegung ist das durch den Hubmagneten 20 auf den Sperrhebel 12 aufgebrachte Moment zu Beginn der Schwenkbewegung des Sperrhebels 12 so groß, daß auch unter Belastung der Verriegelungseinrichtung 1 mit einer Kraft in Sperrichtung S die Rolle 23 aus der Ausnehmung 22 herausbewegt werden kann.

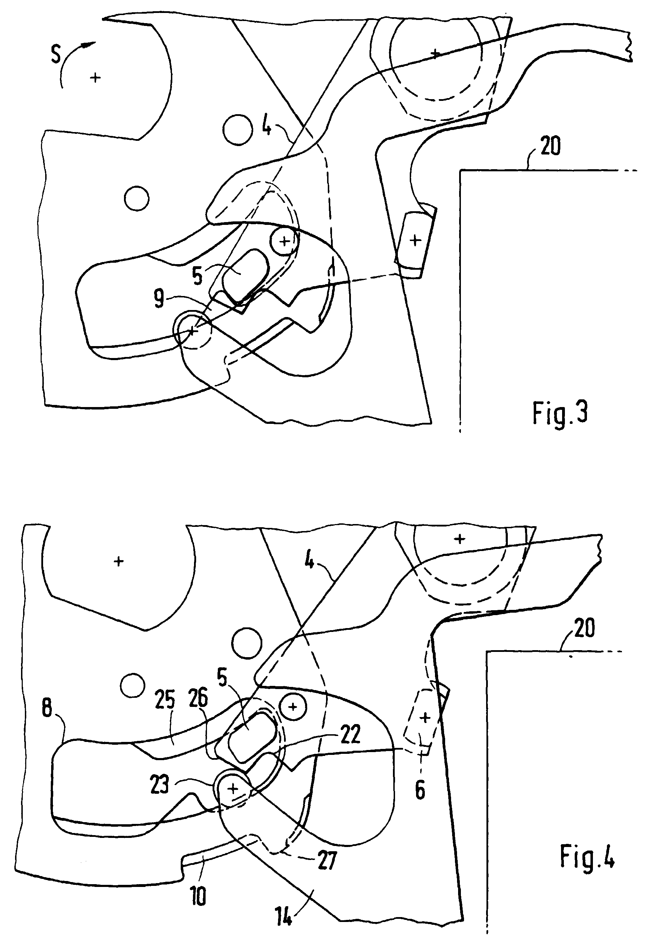

Fig. 2 zeigt den Sperrhebel 12 unmittelbar nach dem die Rolle 23 die Ausnehmung 22 verlassen hat. In dieser Position liegt die Gleitfläche 15 des Sperrhebels 12 am Zapfen 11 des Sperrelementes 4 an und mit dem Verschwenken des Sperrhebels 12 im Gegen-Uhrzeigersinn wird auch das Sperrelement 4 im Gegen-Uhrzeigersinn verschwenkt, während der Zapfen 11 auf der Gleitfläche 15 gleitet. Ist die Verriegelungseinrichtung 1 durch eine in Sperrichtung S angreifende Last beaufschlagt, so unterstützt die aus der Ausnehmung 10 herausgleitende zweite Sperrklinke 6 die Schwenkbewegung des Sperrelementes 4. Da in der dargestellten Situation vom Sperrhebel 12 keine größeren Kräfte mehr zu überwinden sind, kann die Betätigungsbahn 17 für diesen Bereich der Schwenkbewegung so ausgelegt werden, daß eine Wirklinie in Richtung X' zwischen dem Kopf 18 und der Betätigungsfläche 17 wirksam ist, und durch den sich hierbei einstellenden verkleinerten Hebelarm h2 ein Schwenkwinkel des Sperrhebels 12 bei gleichbleibendem Hub des Stößels 19 vergrößert ist. Damit reicht auch ein geringer Gesamthub des Stößels 19 aus, um den Sperrhebel 12 soweit zu verschwenken, daß das Sperrelement 4 in seine in Fig. 3 dargestellte Position verschwenkt wird.

In der Darstellung nach Fig. 3 befindet sich das Verriegelungsglied 3 bereits in der Position N des Wählhebels. Zuvor ist die erste Sperrklinke 5 bei der Bewegung des Verriegelungsgliedes 3 in Sperrichtung S über eine abgeschrägte Flanke des Vorsprunges 9 hinweggeglitten. In der dargestellten Position N liegt die erste Sperrklinke nun an der Rückseite des Vorsprunges 9 an, die in Verbindung mit der ersten Sperrklinke 5 so gestaltet ist, daß bei einer Bewegung des Verriegelungsgliedes 3 entgegen der Sperrichtung S das Sperrelement 4 im Gegen-Uhrzeigersinn verschwenkt wird, so daß eine Bewegung der ersten Sperrklinke 5 über den Vorsprung 9 in dieser Bewegungsrichtung nicht möglich ist.

Soll das Verriegelungsglied 3 und damit auch der Wählhebel über die Stellung N hinaus in Richtung der Stellung P zurückbewegt werden, so ist hierzu der Hubmagnet 20 abzuschalten, so daß der Sperrhebel 12 durch die Druckfeder 13 in seine Ruhelage zurückgedrückt wird. Das ebenfalls federbelastete Sperrelement 4 schwenkt dabei in Richtung seiner Ruheposition. Eine innerhalb der Ausnehmung 8 vorgesehene Steuerkontur 25 dient dabei als rückwärtige Anlage für die erste Sperrklinke 5 und verhindert ein vollständiges Zurückschwenken des Sperrelementes 4 außerhalb der Ausgangsposition P des Verriegelungsgliedes 3 und damit des Wählhebels. Da das Sperrelement 4 nicht vollständig in seine Ruhelage zurückgeschwenkt ist, liegt dabei die Rolle 23 der Stütze 14 an einer Stirnseite 25 des Sperrelementes 4 an und kann damit nicht in die Ausnehmung 22 eingreifen. Die Steuerkontur 25 verhindert damit, daß das Sperrelement 4 durch die Stütze 14 blockiert wird. Dies ist erforderlich, damit auch im unbestromten Zustand des Hubmagneten 20 bei einem Zurückschwenken des Verriegelungsgliedes 3 entgegen der Sperrichtung S die zweite Sperrklinke 6 über einen Vorsprung 27 hinweg in die korrespondierende Ausnehmung 10 hineingleiten kann. Hat in unbestromtem Zustand des Hubmagneten 20 das Verriegelungsglied wieder seine Ausgangsposition P erreicht, so wirkt die Steuerkontur 25 nicht länger auf die erste Sperrklinke 5 ein, und das Sperrelement 4 sowie die Stütze 14 gelangen wieder in ihre in Fig. 1 dargestellte Ausgangsposition, in der das Verriegelungsglied 3 und damit auch der Wählhebel verriegelt ist.

## Patentansprüche

1. Verriegelungseinrichtung (1) für eine Wähleinrichtung mit einem Verriegelungsglied (3), wobei das Verriegelungsglied mit Vorrichtungen zur Aufnahme zumindest eines Sperrelementes (4) versehen ist, und wobei zur Betätigung des Sperrelementes ein fremdkraftbetätigter Sperrhebel (12) vorgesehen ist, **dadurch gekennzeichnet,** daß am Sperrhebel ein erstes Element (14) zur Abstützung des schwenkbar gelagerten Sperrelementes in einer ersten Position und ein zweites Element (15) zum Verschwenken des Sperrelementes in eine zweite Position vorgesehen ist.

2. Verriegelungseinrichtung nach Anspruch 1, **dadurch gekennzeichnet,** daß das erste Element zur Abstützung des Sperrelementes (4) in der ersten Position eine Stütze (14) ist, der mit einer korrespondierenden Wirkfläche (22), vorzugsweise eine Ausnehmung, des Sperrelementes zusammenwirkt, wobei die Stütze in der ersten Position so angeordet ist, daß eine auf das Sperrelement in Sperrichtung (S) aufgebrachte Kraft zur Erhöhung einer Anlagekraft des Sperrhebels an der Wirkfläche führt.

3. Verriegelungseinrichtung nach Anspruch 1 oder 2, **dadurch gekennzeichnet,** daß das Sperrelement (4) zwei Sperrklinken (5,6) aufweist, die mit korrespondierenden Vorsprüngen (9) und Ausnehmungen (10) des Verriegelungsgliedes (3) zusammenwirken, wobei in der ersten Position des Sperrelementes die erste Sperrklinke (5) und in der zweiten Position des Sperrelementes die zweite Sperrklinke (6) wirksam ist.

4. Verriegelungseinrichtung nach Anspruch 1, 2 oder 3, **dadurch gekennzeichnet,** daß die Fremdkraft derart auf den Sperrhebel (12) aufgebracht wird, daß in der Stellung des Sperrhebels zur Abstützung des Sperrelementes (4) in der ersten Position eine hohe Kraft an der Stütze (14), und anschließend beim Verschwenken des Sperrhebels ein großer Weg bei verminderter Kraft zurückgegelegt wird.

5. Verriegelungseinrichtung nach Anspruch 4, **dadurch gekennzeichnet,** daß die Fremdkraft über einen Hubmagneten (20) aufgebracht wird, wobei die Krafteinleitung vom Hubmagneten in den Sperrhebel derart gestaltet ist, daß die Länge (h1) des an der Einleitung der Fremdkraft wirksamen Hebels in der ersten Position großer als die Länge (h2) des beim weiteren Verschwenken des Sperrelementes in die zweite Position wirksamen Hebels ist.

6. Verriegelungseinrichtung nach einem der vorstehenden Ansprüche, **dadurch gekennzeichnet,** daß eine Kontur (25) des Verriegelungsgliedes (3) so gestaltet ist, daß die Stütze (14) außerhalb einer zu verriegelnden Position (P) des Verriegelungsgliedes auch bei nicht betätigtem Sperrhebel (12) nicht in die korrespondierende Wirkfläche (22) am Sperrelement (4) eingreift.
